# EUROPEAN PATENT APPLICATION

(11) **EP 3 859 673 A1**
(43) Date of publication of application: **04.08.2021**
(21) Application number: 19868008.4
(22) Date of filing: 27.09.2019
(51) Int. Cl.: G06T 7/269, G06K 9/40, G06K 9/62

(54) **MODEL GENERATION**

(30) Priority: 29.09.2018 CN 201811152059
(71) Applicant: Beijing Sankuai Online Technology Co., Ltd, Beijing 100080 (CN)
(72) Inventor: QIAN, Deheng, Beijing 100080 (CN); REN, Dongchun, Beijing 100080 (CN); DING, Shuguang, Beijing 100080 (CN); FU, Sheng, Beijing 100080 (CN)
(74) Representative: Haseltine Lake Kempner LLP
(86) International application number: PCT/CN2019/108479
(87) International publication number: WO 2020/063835

(57) **Abstract**

Embodiments of the present disclosure provide a model generation method, including: constructing a training sample set including a sample image, where feature information of the sample image is line information and optical flow information; and learning the training sample set to generate a recognition model that uses line information and optical flow information of an image as input.

## Description

### TECHNICAL FIELD

Embodiments of the present disclosure relate to the field of image recognition technologies, and specifically, to a model generation method, a model generation apparatus, an electronic device, a computer readable storage medium, and an image recognition method.

### BACKGROUND

To recognize an image, data of the image may be input into a model for recognition, and currently, a method for determining the model is mainly based on machine learning. Generating a model through machine learning requires a predetermined training sample set, which includes a plurality of training samples.

### SUMMARY

In view of this, embodiments of the present disclosure provide a model generation method, a model generation apparatus, an electronic device, a computer readable storage medium, and an image recognition method.

According to a first aspect of the present disclosure, a model generation method is provided, including:
constructing a training sample set including a sample image, where feature information of the sample image is line information and optical flow information; and
learning the training sample set by using a machine learning algorithm to generate a recognition model that uses line information and optical flow information of an image as input.

According to a second aspect of the present disclosure, a model generation apparatus is provided, including:
a set construction module, configured to construct a training sample set including a sample image, where feature information of the sample image is the line information and optical flow information; and
a model generation module, configured to learn the training sample set by using a machine learning algorithm to generate a recognition model that uses line information and optical flow information of an image as input.

According to a third aspect of the present disclosure, an electronic device is provided, including:
a processor; and
a memory configured to store instructions executable by the processor;
where the processor is configured to perform the step in the method in any one of the foregoing embodiments.

According to a fourth aspect of the present disclosure, a computer readable storage medium is provided, where a computer program is stored thereon. When the program is executed by a processor, the processor performs the step in the method in any one of the foregoing embodiments.

According to a fifth aspect of the present disclosure, an image recognition method is provided, including:

recognizing an image according to the method in any one of the foregoing embodiments and/or the recognition model generated in the apparatus in any one of the foregoing embodiments.

It should be understood that the above general descriptions and the following detailed descriptions are merely for exemplary and explanatory purposes, and cannot limit the present disclosure.

### BRIEF DESCRIPTION OF THE DRAWINGS

The accompanying drawings herein, which are incorporated in the specification as a part of the specification, show embodiments in accordance with the present disclosure, and together with the specification are used to explain the principle of the present disclosure.
FIG. 1A is a schematic diagram of a normal image;
FIG. 1B is a schematic diagram of noise information;
FIG. 1C is a schematic diagram of an adversarial sample obtained after noise information is added to the image shown in FIG. 1A;
FIG. 2 is a schematic flowchart of a model generation method according to an exemplary embodiment of the present disclosure;
FIG. 3A is a schematic diagram of a sample image according to an exemplary embodiment of the present disclosure;
FIG. 3B is optical flow information of a sample image according to an exemplary embodiment of the present disclosure;
FIG. 3C is optical flow information of another sample image according to an exemplary embodiment of the present disclosure;
FIG. 4 is a schematic flowchart of another model generation method according to an exemplary embodiment of the present disclosure;
FIG. 5A is line information of a sample image according to an exemplary embodiment of the present disclosure;
FIG. 5B is line information of another sample image according to an exemplary embodiment of the present disclosure;
FIG. 6 is a schematic flowchart of still another model generation method according to an exemplary embodiment of the present disclosure;
FIG. 7 is a schematic flowchart of still another model generation method according to an exemplary embodiment of the present disclosure;
FIG. 8 is a hardware structural diagram of an electronic device in which a model generation apparatus is located according to an exemplary embodiment of the present disclosure;
FIG. 9 is a schematic block diagram of a model generation apparatus according to an exemplary embodiment of the present disclosure;
FIG. 10 is a schematic block diagram of another model generation apparatus according to an exemplary embodiment of the present disclosure; and
FIG. 11 is a schematic block diagram of still another model generation apparatus according to an exemplary embodiment of the present disclosure.

### DETAILED DESCRIPTION OF THE EMBODIMENTS

Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. The implementations described in the following exemplary embodiments do not represent all implementations that are consistent with the present disclosure. On the contrary, the implementations are merely examples of apparatuses and methods that are described in detail in the appended claims and that are consistent with some aspects of the present disclosure.

The terms used in the present disclosure are merely for the purpose of describing specific embodiments, and are not intended to limit the present disclosure. The terms "a", "said" and "the" of singular forms used in the present disclosure and the appended claims are also intended to include plural forms, unless otherwise specified in the context clearly. It should be further understood that the term "and/or" used herein indicates and includes any or all possible combinations of one or more associated listed items.

It should be understood that although the terms such as first, second, and third may be used herein to describe various information, such information should not be limited to these terms. For example, within the scope of the present disclosure, first information may also be referred to as second information, and similarly, second information may also be referred to as first information. Depending on the context, for example, the word "if" used herein may be interpreted as "while" or "when," or "in response to determination."

In some embodiments, when an adversarial sample is present in a training sample set, a model for generating a recognized image through machine learning may have a potential security risk, which is referred to as an adversarial sample attack. The adversarial sample attack is to modify an image in a manner that is almost imperceptible to human eyes, for example, by adding noise information to each pixel of the image, so that an image recognition model cannot accurately recognize the image.

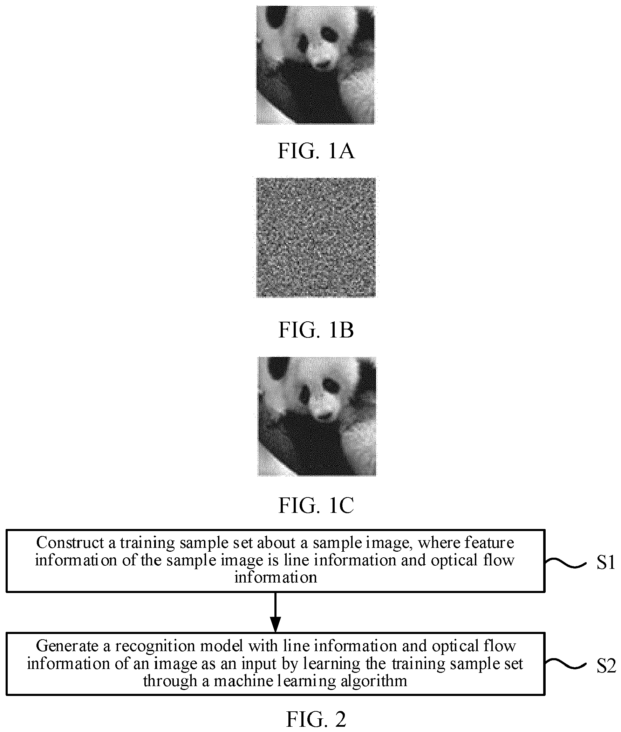

For example, as shown in FIG. 1A, FIG. 1B, and FIG. 1C, FIG. 1A is a normal image, FIG. 1B is noise information, and FIG. 1C is an adversarial sample obtained after noise information is added to the image shown in FIG. 1A.

For human eyes, FIG. 1A and FIG. 1C are almost the same. However, the image recognition model correctly recognizes FIG. 1A as panda with 57.7% confidence, but incorrectly recognizes FIG. 1C as gibbon with 99.3% confidence.

To defend against the adversarial sample attack, a sample augmentation method and a denoising method may be used. In the sample augmentation method, first, a large quantity of adversarial samples are generated, and then the adversarial samples are placed in a training sample set. It is expected that a correct method for classifying the adversarial samples from the training sample set can be learned through machine learning. However, the sample augmentation method can keep relatively high robustness only for a specific type of adversarial sample attack, and will not function for an adversarial sample attack generated using a new method. In the denoising method, input data may be projected to a manifold in which normal data is located. In a projection process, impact generated by an adversarial sample is eliminated, then the projected data is used as new data, and image recognition is performed. Although noise information in the adversarial sample can be fundamentally removed in the denoising method theoretically, it is difficult to completely remove the noise information in the adversarial sample in practice. Consequently, an actual effect is not good enough.

In view of this, to effectively defend against the adversarial sample attack, an embodiment in accordance with the present disclosure provides a model generation method. FIG. 2 is a schematic flowchart of a model generation method according to an exemplary embodiment in accordance with the present disclosure. As shown in FIG. 2, the model generation method may include the following steps:
Step S1: Construct a training sample set including a sample image, where feature information of the sample image is line information and optical flow information.

In an embodiment, the line information of the image may be one type of information, or may be a plurality of types of information, for example, may include straight line information, curved line information, and closed line information. In an embodiment, the optical flow information of the image is used to determine a moving trend of an object in the image.

Step S2: Learn the training sample set by using a machine learning algorithm to generate a recognition model that uses line information and optical flow information of an image as input.

In an embodiment, because adversarial noise added to an adversarial sample changes pixel values (for example, grayscale values) of a plurality of pixels in an image, and the pixels whose values are changed are not strictly regular, there is little impact on lines in the image, and on a contour formed by the lines.

In an embodiment, adversarial noise added to an adversarial sample changes pixel values of a plurality of pixels in an image, but for a plurality of consecutive images, moving trends of objects in the plurality of images are not changed, the moving trends of the objects in the images may be reflected based on moving tracks of pixels in a time dimension, and the moving trends of the objects in different images are different. Therefore, a moving trend of an object may express content in an image, thereby serving as a distinguishing feature of the image.

Therefore, a moving trend of an object in an image may be determined, where the moving trend may be represented by using an optical flow, and the optical flow includes a moving direction and a moving speed of each pixel in the image.

It should be noted that the feature information of the sample image may include only the line information and the optical flow information, so that other information that may be affected by noise information in the adversarial sample is prevented from being used as the feature information, and a recognition model obtained through machine learning can accurately distinguish between images without being affected by the noise information in the adversarial sample.

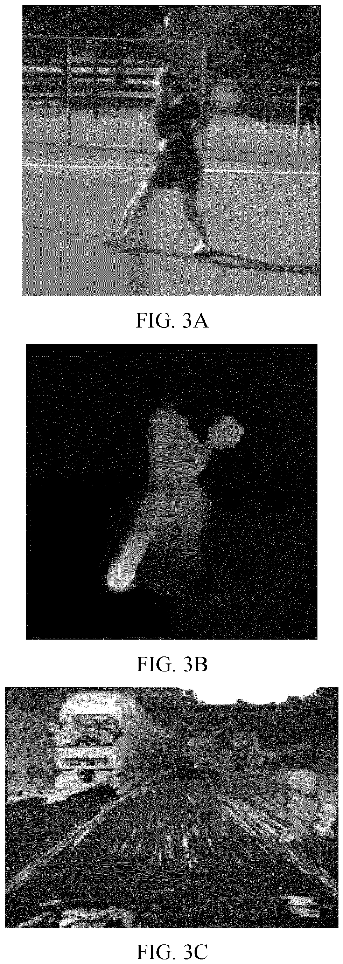

FIG. 3A is a schematic diagram of a sample image according to an exemplary embodiment in accordance with the present disclosure. FIG. 3B is optical flow information of a sample image according to an exemplary embodiment in accordance with the present disclosure. FIG. 3C is optical flow information of another sample image according to an exemplary embodiment in accordance with the present disclosure.

As shown in FIG. 3A, a person in a sample image is playing tennis. Based on the sample image and one or more frames of images before or after the sample image, optical flow information of the sample image may be determined, and a moving trend of an object in the sample image may be determined based on the optical flow information. As shown in FIG. 3B, it may be determined that a moving speed of a person's right foot is greater than a moving speed of the left foot. A distance of an object in the sample image may be further determined based on the optical flow information. As shown in FIG. 3C, an object that moves faster in the image has a closer distance, and an object that moves slower has a farther distance.

It may be learned from the foregoing analysis that, because a line and a moving trend of an object in an image may express content in the image, line information of the object and optical flow information that represents the moving trend may be collected a distinguishing feature of the image, and a training sample set may be constructed based on a sample image that uses the line information and the optical flow information as feature information. Further, the training sample set is learned through machine learning to generate a recognition model. The recognition model uses the line information and the optical flow information of the image as input. Because adversarial noise added to an adversarial sample has little impact on the line information and the optical flow information of the image, when the image is recognized based on the generated recognition model, the line information and the optical flow information of the image may be used as input to recognize the image, thereby avoiding impact of the adversarial noise on a recognition result and improving recognition accuracy.

It should be noted that the feature information of the sample image may include only the line information, so that other information that may be affected by noise information in the adversarial sample is prevented from being used as the feature information, and a recognition model obtained through machine learning can accurately distinguish between images without being affected by the noise information in the adversarial sample.

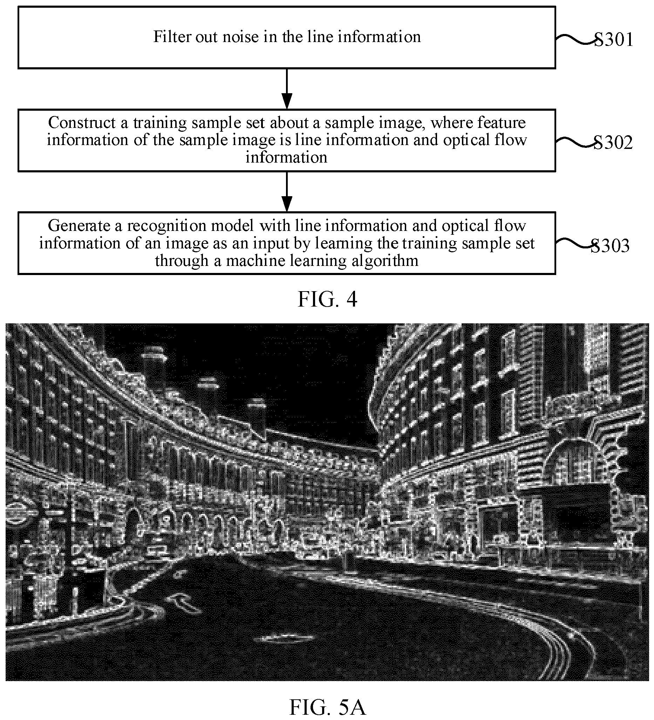

FIG. 4 is a schematic flowchart of another model generation method according to an exemplary embodiment in accordance with the present disclosure. As shown in FIG. 4, the model generation method further includes:
Step S3: Before the training sample set including the sample image is constructed, filter out noise in the line information.

In an embodiment, there may be a relatively large quantity of noise in the line information extracted from the sample image. An intuitive visual representation is that lines are relatively rough, and the noise cannot accurately express content in the image, that is, the noise cannot accurately serve as a distinguishing feature of the image. If the training sample set is formed based on the sample image with a relatively large quantity of noise, a model further obtained through machine learning cannot accurately distinguish between images. By filtering out the noise in the line information, it can be ensured that the line information can accurately express the content in the image, that is, can accurately serve as a distinguishing feature of the image, thereby ensuring that the model further obtained through machine learning can accurately distinguish between images.

FIG. 5A is line information of a sample image according to an exemplary embodiment of the present disclosure.

As shown in FIG. 5A, a composition of an image is relatively complex, and extracted line information has a relatively large quantity of noise. For example, an object has an indistinct outline and many dots, and noise cannot accurately express content in the image. For example, with regard to dots in a road shown in FIG. 5A, actually the road does not have so many dots as shown in FIG. 5A. If a training sample set is formed based on a sample image with a relatively large quantity of noise, a model further obtained through machine learning cannot accurately distinguish between images.

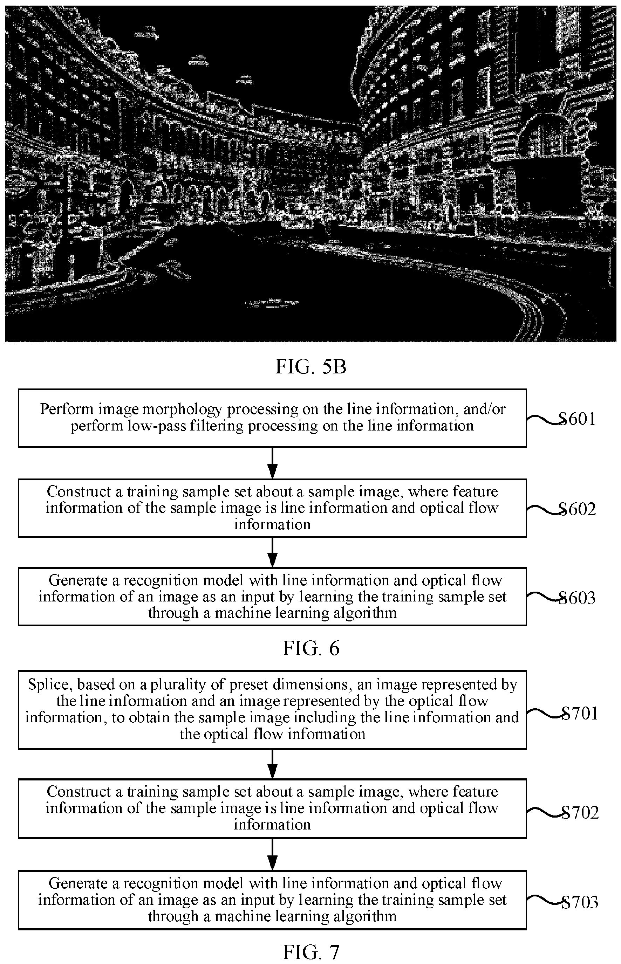

FIG. 5B is line information of another sample image according to an exemplary embodiment of the present disclosure.

As shown in FIG. 5B, by filtering out noise in the line information, it can be ensured that content that does not exist in an actual environment is filtered out, so that the line information can accurately express content in an image, that is, can accurately serve as a distinguishing feature of the image, thereby ensuring that a model further obtained through machine learning can accurately distinguish between images.

FIG. 6 is a schematic flowchart of still another model generation method according to an exemplary embodiment of the present disclosure. As shown in FIG. 6, the filtering out noise in the line information includes:
Step S31: Perform image morphology processing on the line information, and/or perform low-pass filtering processing on the line information.

In an embodiment, a manner of filtering out the noise in the line information is not unique, and may be selected according to a requirement. One manner may be selected, or a plurality of manners may be selected and combined.

For example, a manner of image morphology processing may be used, a manner of low-pass filtering may be used, or low-pass filtering may be further performed after image morphology processing is performed. Image morphology processing refers to performing processing such as expansion and corrosion on a pixel, where expansion is an operation of obtaining a local maximum value, and corrosion is an operation of obtaining a local minimum value. For example, an opening operation may be performed on some pixels, that is, corrosion is performed before expansion. The opening operation may be used to eliminate a small object, separate objects at a fine place, and smooth a boundary of a relatively large object without obviously changing the area thereof. For some pixels, a closing operation may be performed, the closing operation is actually performing expansion before corrosion, and the closing operation can be used to eliminate a small black hole (black region).

In some embodiments, the model generation method further includes: determining the optical flow information of the sample image based on a moving direction and a moving speed of a pixel in the sample image.

In an embodiment, a method for calculating an optical flow of an image is not unique, and may be selected according to a requirement. For example, the optical flow may be calculated based on gradients, may be calculated based on matching, may be calculated based on energy, or may be calculated based on phases.

FIG. 7 is a schematic flowchart of still another model generation method according to an exemplary embodiment of the present disclosure. As shown in FIG. 7, the method includes the following step:
Step S4: Before the training sample set including the sample image is constructed, splice, based on a plurality of preset dimensions, an image represented by the line information and an image represented by the optical flow information, to obtain the sample image including the line information and the optical flow information.

In an embodiment, to construct a sample image whose feature information includes both line information and optical flow information, the line information and the optical flow information may be fused. A manner of fusing the two types of information is not unique, and may be selected according to a requirement. For example, it is assumed that preset dimensions of an image include length, width, and channel quantity (taking a color image as an example, the color image may include three channels R (red), G (green), and B (blue)). An image may be expressed based on line information, an image may be expressed based on optical flow information, and the image expressed by the line information and the image expressed by the optical flow information may be spliced based on the preset dimensions.

Splicing refers to expressing line information and optical flow information for each pixel by using the foregoing preset channels. For example, the line information may be represented on three channels of R, G, and B, that is, one value exists on the R channel, one value exists on the G channel, and one value exists on the B channel. The optical flow information may be represented on two channels of length and width, for example, one value exists on the length channel, and one value exists on the width channel. Therefore, in a spliced image, each pixel may include information about five channels, which is equivalent to a five-dimensional vector. In this way, a sample image whose feature information includes both the line information and the optical flow information is formed.

It should be noted that the machine learning algorithm used for learning in the foregoing embodiment includes but is not limited to a convolutional neural network, a support vector machine, a decision tree, a random forest, and the like, and may be specifically selected according to a requirement.

Corresponding to the foregoing embodiment of the model generation method, the present disclosure further provides an embodiment of a model generation apparatus.

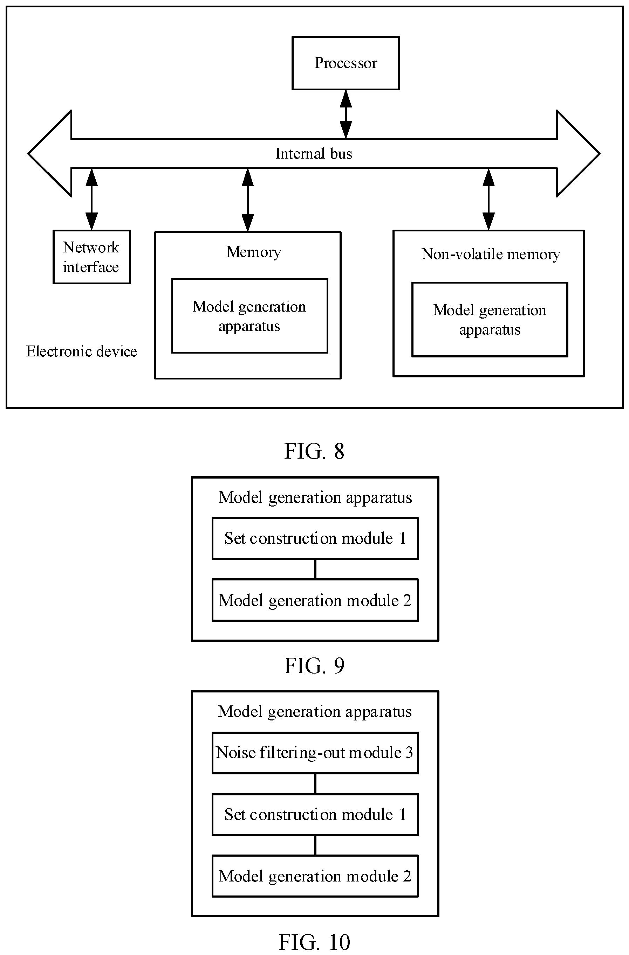

The embodiment of the model generation apparatus in the present disclosure may be applied to an electronic device. The device embodiments may be implemented by using software, or hardware or in a manner of a combination of software and hardware. Using a software implementation as an example, as a logical apparatus, the apparatus is formed by reading corresponding computer program instructions from a non-volatile memory into an internal memory by a processor of an electronic device where the apparatus is located. In terms of a hardware aspect, as shown in FIG. 8, it is a hardware structural diagram of an electronic device in which a model generation apparatus in an exemplary embodiment of the present disclosure is located. In addition to a processor, a memory, a network interface, and a non-volatile memory shown in FIG. 8, the electronic device in which the apparatus is located in this embodiment may generally further include other hardware according to an actual function of the electronic device. Details are not described herein.

FIG. 9 is a schematic block diagram of a model generation apparatus according to an exemplary embodiment of the present disclosure. As shown in FIG. 9, the model generation apparatus includes:
a set construction module 1, configured to construct a training sample set including a sample image, where feature information of the sample image is line information and optical flow information; and
a model generation module 2, configured to learn the training sample set to generate a recognition model that uses line information and optical flow information of an image as input.

FIG. 10 is a schematic block diagram of another model generation apparatus according to an exemplary embodiment of the present disclosure. As shown in FIG. 10, the model generation apparatus further includes:
a noise filtering-out module 3, configured to filter out noise in the line information.

Optionally, the noise filtering-out module is configured to: perform image morphology processing on the line information, and/or perform low-pass filtering processing on the line information.

Optionally, the apparatus further includes:
an optical flow determining module, configured to determine the optical flow information of the sample image based on a moving direction and a moving speed of a pixel in the sample image.

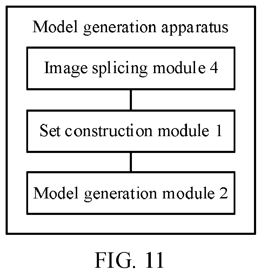

FIG. 11 is a schematic block diagram of still another model generation apparatus according to an exemplary embodiment of the present disclosure. As shown in FIG. 11, the model generation apparatus further includes:
an image splicing module 4, configured to splice, based on a plurality of preset dimensions, an image expressed by the line information and an image expressed by the optical flow information, to obtain the sample image that includes the line information and the optical flow information.

For details about the implementation processes of the functions and effects of the modules in the foregoing apparatus, refer to the implementation processes of the corresponding steps in the foregoing method. Details are not described herein again.

Because the apparatus embodiments basically correspond to the method embodiments, for related parts, reference may be made to the descriptions in the method embodiments. The foregoing described device embodiments are merely examples. The units described as separate parts may or may not be physically separate, and the parts displayed as units may or may not be physical units, may be located in one position, or may be distributed on a plurality of network units. The objectives of the solutions of the present disclosure may be implemented by selecting some or all of the modules according to actual needs. A person of ordinary skill in the art may understand and implement the embodiments without creative efforts.

An embodiment of the present disclosure further provides an electronic device, including:
a processor; and
a memory configured to store instructions executable by the processor;
where the processor is configured to perform the step in the method in any one of the foregoing embodiments.

An embodiment of the present disclosure further provides a computer readable storage medium on which a computer program is stored. When the program is executed by a processor, the processor performs the step in the method in any one of the foregoing embodiments.

An embodiment of the present disclosure further provides an image recognition method, including: recognizing an image according to the method in any one of the foregoing embodiments and/or the recognition model generated in the apparatus in any one of the foregoing embodiments. For example, for a to-be-recognized image, line information and optical flow information of the to-be-recognized image may be first obtained, and then the line information and the optical flow information of the to-be-recognized image are input into the recognition model. A recognition result output by the recognition model may indicate an object in the to-be-recognized image.

After considering the specification and practicing the present disclosure, a person skilled in the art may easily conceive of other implementations of this application. This application is intended to cover any variations, uses, or adaptive changes of this application. These variations, uses, or adaptive changes follow the general principles of this application and include common general knowledge or common technical means in the art, which are not disclosed in this application. The specification and the embodiments are considered as merely exemplary, and the scope and spirit of this application are pointed out in the following claims.

It should be understood that this application is not limited to the precise structures described above and shown in the accompanying drawings, and various modifications and changes can be made without departing from the scope of this application. The scope of this application is subject only to the appended claims.

## Claims

1. A model generation method, comprising:
constructing a training sample set comprising a sample image, wherein feature information of the sample image comprises line information and optical flow information; and
generating a recognition model with line information and optical flow information of an image as an input by learning the training sample set.

2. The method according to claim 1, further comprising:
before constructing the training sample set comprising the sample image, filtering out noise in the line information.

3. The method according to claim 2, wherein filtering out the noise in the line information comprises:
performing image morphology processing on the line information, and/or
performing low-pass filtering processing on the line information.

4. The method according to claim 1, further comprising:
determining the optical flow information of the sample image based on a moving direction and a moving speed of a pixel in the sample image.

5. The method according to any one of claims 1 to 4, further comprising:
before constructing the training sample set comprising the sample image, splicing, based on a plurality of preset dimensions, an image represented by the line information and an image represented by the optical flow information, to obtain the sample image comprising the line information and the optical flow information.

6. A model generation apparatus, comprising:
a set construction module, configured to construct a training sample set comprising a sample image, wherein feature information of the sample image comprises line information and optical flow information; and
a model generation module, configured to generate a recognition model with line information and optical flow information of an image as an input by learning the training sample set.

7. The apparatus according to claim 6, further comprising:
a noise filtering-out module, configured to filter out noise in the line information.

8. The apparatus according to claim 7, wherein the noise filtering-out module is configured to: perform image morphology processing on the line information, and/or perform low-pass filtering processing on the line information.

9. An electronic device, comprising:
a processor; and
a memory configured to store instructions executable by the processor;
wherein the processor is configured to perform the step in the method according to any one of claims 1 to 5.

10. A computer readable storage medium, on which a computer program is stored, wherein when the computer program is executed by a processor, the processor performs the step in the method according to any one of claims 1 to 5.

11. An image recognition method, comprising:
recognizing an image according to the recognition model generated in the method in any one of claims 1 to 5 and/or in the apparatus in any one of claims 6 to 8.
